Europäisches Patentamt

**European Patent Office**

**Office européen des brevets**

(19)

(11) Publication number: **0 057 292**
A1

(12) # EUROPEAN PATENT APPLICATION

(21) Application number: **81200940.5**

(22) Date of filing: **25.08.81**

(51) Int. Cl.³: **E 04 G 21/12**

(30) Priority: **20.01.81 SE 8100278**

(43) Date of publication of application: **11.08.82**
**Bulletin 82/32**

(84) Designated Contracting States: **AT BE CH DE FR GB IT LI NL**

(71) Applicant: **Lorentz, Wahman, Viktoriagatan 32, S-411 25 Göteborg (SE)**

(72) Inventor: **Lorentz, Wahman, Viktoriagatan 32, S-411 25 Göteborg (SE)**

(74) Representative: **Roth, Ernst Adolf Michael et al, GÖTEBORGS PATENTBYRA AB Box 5005, S-402 21 Göteborg (SE)**

(54) **A method of interconnecting at least two load transmitting members by pressure jointing and a coupling for carrying out the method.**

(57) A method and a coupling for interconnecting load transmitting members (12, 13) such as a ribbed reinforcement bar (13) and the end socket of a concrete pile by means of a connecting sleeve (14) insertable between said members.

The object is to provide a connection which is at least as strong as the bar. This has been attained by pressing the connecting element (14) endwise into the space (17) between the members (12, 13) so that the material of the connecting element (14) will be permanently deformed and will adapt to the outer and inner form, respectively, of said members and will completely fill the opening (17), exerting a radial pressure on said members (12, 13).

EP 0 057 292 A1

# A METHOD OF INTERCONNECTING AT LEAST TWO LOAD TRANSMITTING MEMBERS BY PRESSURE JOINTING AND A COUPLING FOR CARRYING OUT THE METHOD

## Technical field

The present invention refers to a method of interconnecting at least two load transmitting members by press jointing, one of said members being in the form of a rod or the like, e.g. a reinforcing rod, and the second member consisting of a structural part, e.g. a coupling sleeve, an end socket of a concrete pile or the like, provided with an opening for receiving said bar, and wherein a sleeve-shaped connecting element is fixed between said structural part and said rod. The invention also relates to a coupling for carrying out the method.

## Background of the invention

When a load transmitting connection of a ribbed reinforcement rod is to be effected to a load carrying member, e.g. an end socket for a concrete pile, the ribs frequently cause complications. If the connection is to be made by means of screw threads the ribs must be removed before the threads are cut, which is a comparatively labourious measure. Welding of the reinforcing rod will mostly be out of the question for various reasons, for instance that the load carrying member consists of non-weldable cast iron, whereas the rod is made of high-tensile steel.

For the load transmitting interconnection of two ribbed reinforcement rods it is known to provide conically tapered or wedge-shaped interconnecting parts, which have at their inner side recesses corresponding to the ribs of the rod and which are pressed against the rods by means of external tensioning sleeves with corresponding taper. These known interconnecting devices demand a very high degree of agreement between the outer profile of the reinforcing rods and the shape of the recesses in the interconnecting parts, and it is very difficult to meet this requirement, since the ribs are formed without any higher demands on tolerance and, further, various makes of reinforcing rods have different shapes of the ribs or rib-like projections.

On building sites, where the connection of reinforcing rods to load carrying members is usually performed, it is as a rule not possible to perform work shop jobs such as turning, thread cutting, welding etc., since the workers at hand are not skilled at such jobs and the necessary technical equipment normally is not to be found on the building site.

Coupling devices are also known for the interconnecting of smooth reinforcing rods, wires or the like, wherein the parts are interconnected by means of an external radial pressing force. However, this necessitates a comparatively large press and if the reinforcing rods are lying closely together as in the case of a concrete pile such pressing equipment cannot be used.

## The object and essential characteristics of the invention

The object of the present invention is to provide a method and a coupling for establishing an interconnection between at least two load transmitting members, and more specifically a method which requires little work, does not require special skill or knowledge, may be performed with the aid of simple and easily operable apparatus, does not require precision manufactured connecting elements, and gives a load transmitting connection which is at least as strong as the tensile strength of the ribbed reinforcement rod. Another object of the invention is to provide a coupling, the connecting element of which retains its connecting force even if the material of the element should age and the connecting force decrease. These objects have been attained in that the connecting element is pressed endwise into the space between the members so that the material in the connecting element will be permanently deformed and will adapt to the outer end inner shape, respectively, of said members and will completely fill said space, exerting a radial pressure on said members.

## Description of the drawings

Figure 1 is a section through a part of the end socket of a concrete pile where a ribbed reinforcement rod has been connected to the socket by means of the pressure joint according to the invention,

Figure 2 is an end view of a portion of the end socket shown in figure 1,

Figure 3 is a section corresponding to figure 1 through the end socket illustrating the initial phase of the pressing operation,

Figures 4, 5 and 6 are cross-sections through connecting sleeves according to three different embodiments of the invention,

Figure 7 is a longitudinal section through a connecting device for load transmitting interconnection of two parallel reinforcing rods,

Figure 8 is a section through a portion of the end socket of a concrete pile with a modified coupling according to the invention,

Figure 9 is a section corresponding to figure 7 through a coupling according to the invention for the load transmitting interconnection of two smooth reinforcing rods arranged in axial alignment,

Figure 10 is a perspective view of the locking device of the coupling before being moulded into the connecting element,

Figure 11 is a view from above of a securing plate of the kind incorporated in figure 10,

Figure 12 is a view in perspective of an alternative embodiment of a helical locking device before the moulding, and

Figure 13 illustrates a further embodiment of a pressure joint coupling according to the invention.

## Description of embodiments

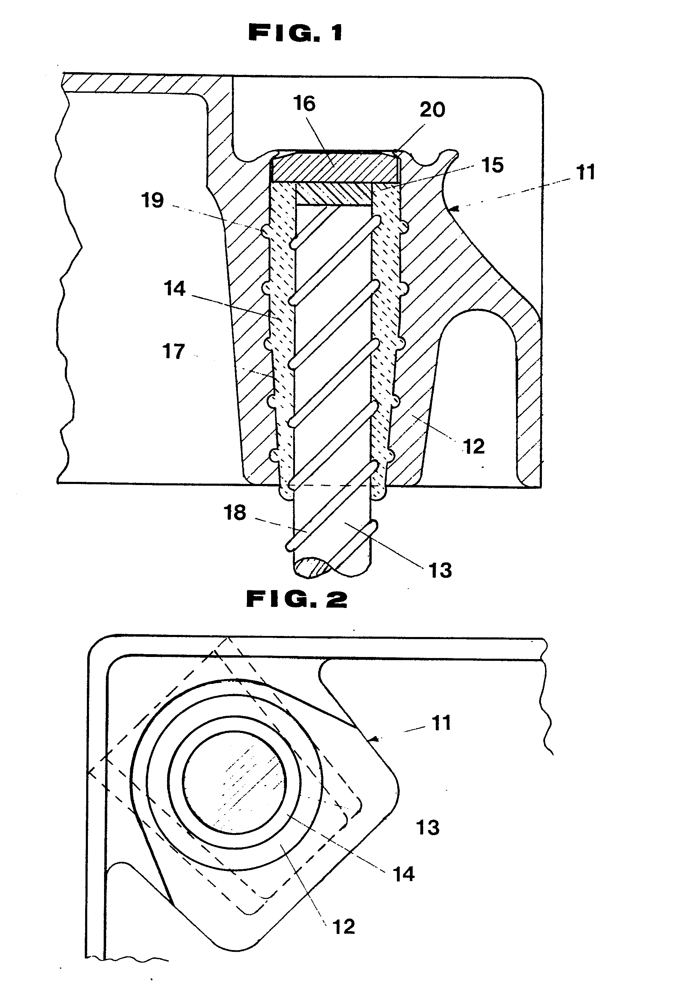

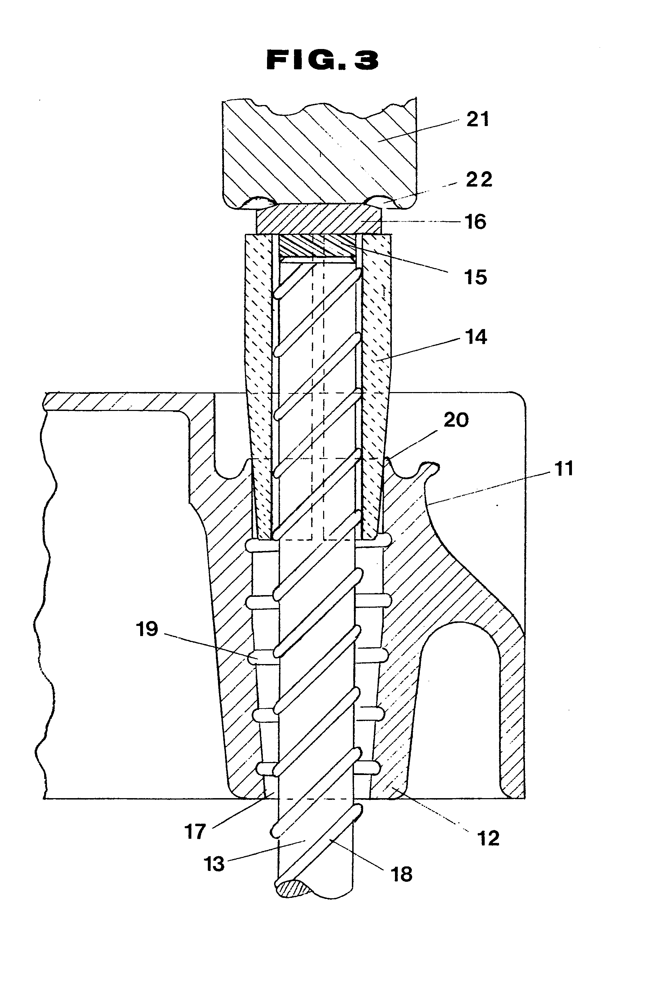

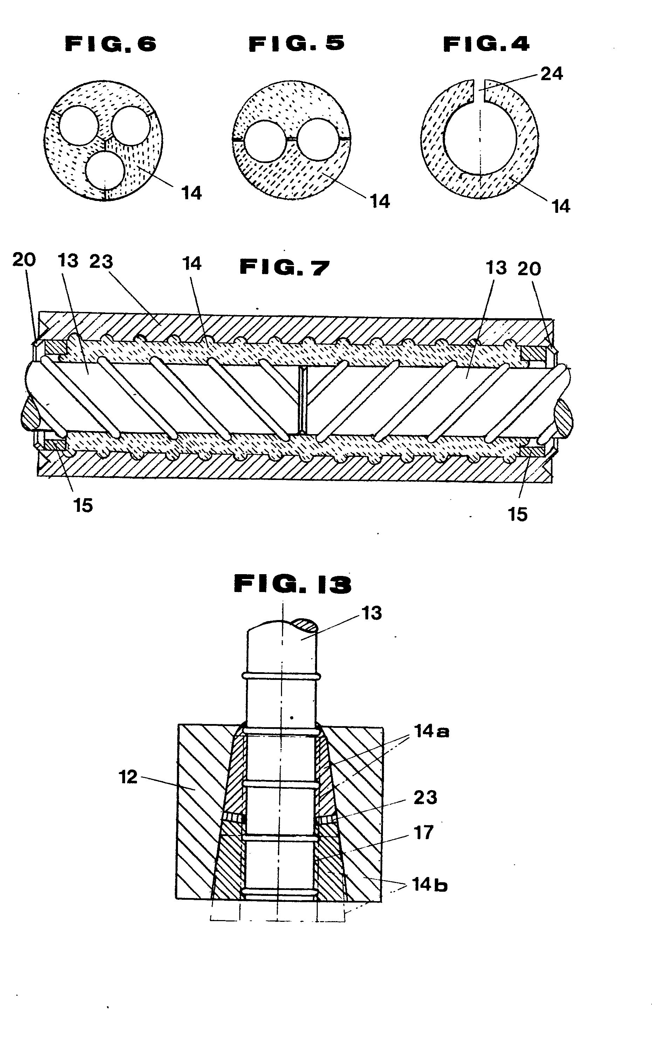

Figures 1, 2 and 3 illustrate the method according to the invention being employed in connection with the end socket 11 of a concrete pile, said end socket for instance being in the form of a joint fitting for the interconnection of two concrete piles, pillars or the like. The end socket may also be in the form of a pile shoe or some other building component where the longitudinal reinforcement in the form of ribbed reinforcing rods is to be connected to some form of load carrying building component. The end socket 11 is provided with a number of connecting bosses 12, one for each ribbed reinforcing rod 13. Each connecting boss is slightly conically tapered towards the rod 13. A connecting sleeve 14, which may consist of for instance a plastic material with high shearing strength, such as glass fibre reinforced polyamide, is fitted around the upper the end of the reinforcing rod 13 as illustrated in figure 3. The connecting sleeve 14 may be divided into two or more parts in the longitudinal direction of the sleeve or, as shown in figure 4, it may be provided with a longitudinal slit 24. The sleeve has smooth outer and inner surfaces and has an inner free diameter substantially corresponding to the diameter of the ribbed reinforcing rod 13, not counting the height of the ribs 18. The outer measure of the connecting sleeve 14 is slightly larger than the opening 17 in the connecting bars 12. Against the end surfaces of the rod 13 there is provided a disc 15 of a plastic material. The material of the disc 15 as well as that of the connecting sleeve 14 have dielectric properties. A pressure plate 16 of steel is provided between the upper end of the connecting sleeve and a pressure piston 21 which is a part of a pressing device (not shown) and with the aid of which the connecting device 14 and the reinforcing rod 13 may be pressed into the connecting boss 12 as illustrated in figure 1. When the connecting rod 14 is pressed into the opening 17 of the connecting boss 12 with a sufficiently high pressure, the material of the sleeve will be permanently deformed, i.e. the material will be subjected to cold flowing and will adapt on the one hand to the ribs of the reinforcement rod and on the other hand flow into transverse recesses 19 provided in the inner side of the opening 17. Practical tests have shown that a pressure of 40 tons/cm$^2$ is appropriate.

In order to prevent the sleeve from being pressed out through the opening 17, the opening as well as the connecting sleeve 14 are at least partly made with a conical tapering shape. In certain cases it may be desirable to prevent the sleeve 14 from expanding in the opening 17 of the compression. The sleeve is held against axial displacement in that a collar 20 at one of the opening will be upset over the pressure plate 16, which will thus be permanently fixed in the connecting boss. The end surface of the pressure piston 21 lying against the pressure plate 16 may preferably be provided with an annular depression 22 which, in the final phase of the pressing will cause the collar to be upset inwardly towards the opening 17 as illustrated in figure 1.

Tensile tests have shown that a connection of the above described kind with a ribbed reinforcing rod having a diameter of 20 mm and being made of steel with the quality designation KS 40 and a connecting sleeve of polyamide (PA 66) with an inmix of 30% glass fibre reinforcement is stronger than the tensile strength of said reinforcement bar, which was pulled to rupture.

The new method according to the invention also makes it possible to use two or more smaller reinforcing rods instead of only one ribbed reinforcing rod with large cross-sectional area by designing the connecting sleeve 14 in a suitable manner, as indicated in figures 5 and 6. It is also possible to use the method according to the invention for the interconnection of reinforcing rods, whereby a sleeve according to any of figures 4, 5 or 6 is fitted onto the end portion of each rod and fitted into a surrounding tube 23 in accordance with figure 7. A pressure plate 16 at each end provided with one or more openings 25 for the reinforcing rods permits the sleeves to be subjected to a pressure from both ends. The pressure plates 17 are secured in any suitable manner against axial displacement in the tube 23.

The plastic material in the sleeve may be of some other type than polyamide plastic, for instance acetate or ebonite plastic or any other suitable material with sufficiently high shearing strength and the ability to be subjected to cold flow under pressure.

In the embodiment described, the connecting sleeve has been pressed into the connecting boss of the socket together with the reinforcing rod, but it is also possible to reverse the procedure or to press the sleeve into the space between the reinforcing rod and the connecting boss with the rod already in place.

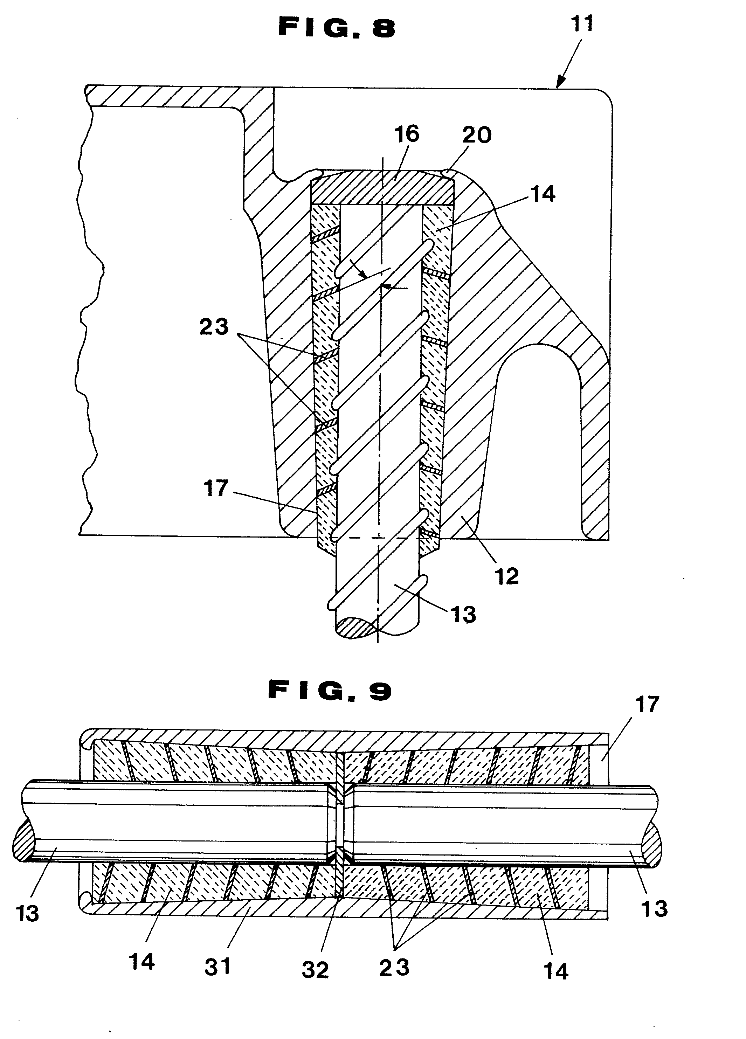

In the embodiment according to figure 8, there is moulded into the connecting sleeve 14 a locking device in the form of a number of securing plates 23, which extend across a substantial part of the thickness of the wall casing from the outer to the inner circumference of the casing. The securing plates 23 are arranged at an acute angle to the longitudinal axis 24 of the reinforcing rods 13 and are formed in such a way that the edges thereof follow the inner and outer contour, respectively, of the connecting sleeve. If it is desired that the reinforcing rod 13 should be electrically insulated from the socket 11, the securing plates 13 are preferably arranged with their edges inside of the casing walls so that between the securing plates and the inner and outer surface of the connecting sleeve there will remain a thin layer of insulating material.

The securing plates 23 are oriented in the mould during manufacturing of the connecting sleeve 14 by the aid of rods 27 of a suitable material, for instance the same plastic material as is used for manufacturing the sleeve 14. The rods 27 are provided with grooves 28 or the like and the securing plates 23 have corresponding edge recesses 29 so that the securing plates are secured between the rods by inserting their edge portions surrounding the recesses 29 into the grooves 28.

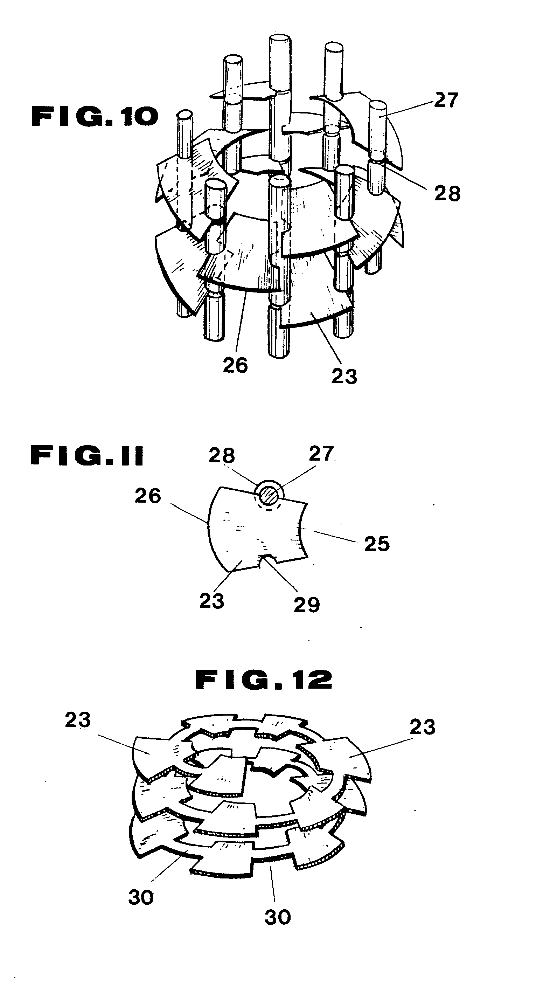

Figure 12 illustrates an alternative embodiment of the locking device 23, where the securing plates may be provided in a simple manner and in exact positions. The securing plates 23 are punched out from a sheet metal strip with suitable spacings and with a connecting bridge 30 between the individual securing plates. The sheet metal strip with the securing plates and the connecting bridges is thereafter helically wound and may also be annealed. The helical structure produced in this manner is thereafter placed in a mould for manufacturing of the sleeve 14.

Figure 9 illustrates one example of the invention in which two rods, for instance smooth reinforcing rods, are interconnected in longitudinal alignment. In this embodiment two connecting sleeves 14 have been fitted into a strong steel casing 31, the securing plates 23 of the two connecting sleeves being oriented in a direction towards one another. A rod 13 which is to be connected by means of the coupling according to the invention is pressed into the coupling until it reaches an abutment 32, whereafter a second rod 13 is inserted from the opposite end.

Since the securing plates are in direct engagement with the rod 13 as well as with the structural part surrounding the connecting sleeve 14, the fixation of the connection may be destroyed only by destruction of the coupling. In those cases where the reinforcing bar is provided with ribs or similar projections the securing plates are preferably arranged with the same spacing as the spacing between the ribs of the reinforcing rod.

In certain environments the resistance to ageing of the plastic material is uncertain and has not been completely investigated. In those cases and when it is desired to have an efficient fixation of the connecting sleeve without mechanical locking devices the connecting element according to figure 13 may be used. In the embodiment shown, this connecting element consists of two parts 14a and 14b with a locking member 23 placed therebetween. The two connecting element parts 14a and 14b are each made of a sintered metal pressed piece, the porousity and sintering temperature of which have been chosen so that each part 14a and 14b of the connecting element may be slightly compressed and thereby change their shape under the influence of a conventional jack such as a hydraulic jack. The double dot and dash lines in figure 13 illustrate the position of the lower element part before being pressed into final position.

Practical tests have shown that a metal pressed piece made from an iron powder and pressed to a solid body with the specific weight of minimum 6.0 and which has been sintered at about 750 $^{o}$C may be deformed (cold flowing) at a pressure of 16.5 tons/cm$^{2}$. By dividing the connecting element into two parts 14a and 14b it is possible to provide a washer-shaped locking device 23 between the elements so that the locking device becomes secured in the connecting element. The sintered metal pressed piece has the advantage that deformation is permanent, since the material in question does not have any tendency to expand when the pressure is released. The pressure, which is comparatively low per se, is wholly sufficient to also obtain a very good interconnection between the contact surfaces of the socket and the mantle surfaces of the connecting elements, even if there are no recesses or the like provided in the contact surfaces of the end socket. Therefore, it is not necessary to make any special provisions for locking the connecting element against axial displacement.

It is conceivable to manufacture the connecting element in one piece with the locking device or devices which are molded into the connecting element, but another possibility is to make the connecting element in several parts with locking devices placed therebetween.

## CLAIMS

1. A method of interconnecting at least two load transmitting members (12, 13) by pressure jointing, one of said members being in the form of a rod (13) or the like, e.g. a reinforcing rod, and the second member consists of a structural part (12), e.g. a coupling sleeve or an end socket (11) of a concrete pile or the like, provided with a recess (17) for receiving said rod, and wherein a sleeve-shaped connecting element (14) is fixed between said structural part and said rod,

c h a r a c t e r i z e d in that the connecting element (14) is pressed endwise into the space (17) between the members (12, 13) so that the material of the connecting element (14) will be permanently deformed, adapting to the outside and inside shape, respectively, of said members, and will completely fill said recess (17), exerting a radial pressure on said members (12, 13).

2. A method as claimed in claim 1, c h a r a c t e r i z e d in that the connecting element (14) is secured against axial displacement in the member (12) surrounding said element.

3. A method as claimed in claim 2, c h a r a c t e r i z e d in that the pressure is applied to a pressure plate (16), which is insertable into the recess (17) and which acts upon one end of the connecting element (14) and that, in the same pressing operation, at least peripheral parts of a collar (20) surrounding the opening (17) are turned over inwardly towards the opening to a position lying against the pressure plate (16).

4. A method as claimed in claim 1, 2 or 3, c h a r a c t e r i z e d in that a disc (15) of a dielectric plastic material, for instance glass fibre reinforced polyamide, is provided between the end of the ribbed reinforcement rod (13) and the pressure plate (16) inside of the sleeve (14).

5. A pressure joint coupling between at least two load transmitting members (12, 13), one of which consists of a rod (13) or the like, e.g. a reinforcement rod, and the other member of which consists of a structural part (12), e.g. a coupling sleeve, an end socket of a concrete pile or the like, provided with an opening for receiving said rod, and wherein a sleeve-shaped connecting element is adapted to be fixed between said members,
c h a r a c t e r i z e d  i n that said connecting element (14) consists of at least one sleeve of a load transmitting material which is deformable under pressure, that the connecting element (14) is adapted to be axially fitted into the space between the members (12, 13) and, by applying a pressing force in the longitudinal direction of the element, is permanently deformable, adapting its shape to the outer and inner contours, respectively, of said members.

6. A coupling as claimed in claim 5,
c h a r a c t e r i z e d  i n that at least one locking device (23) is arranged in or in connection to the sleeve-shaped connecting element and extends across a substantial portion of the thickness of the wall of the element from its outer to its inner circumference, said locking device or devices (23) being arranged at an acute angle to the longitudinal axis of the element (14).

7. A coupling as claimed in claim 6,
c h a r a c t e r i z e d  i n that the edges (25, 26) of the locking device (23) facing the members (12, 13) are made with substantially the same shape as those portions of said members which are situated opposite to said locking device.

8. A coupling as claimed in claim 6 or 7,
c h a r a c t e r i z e d  i n that said connecting element (14) is divided along at least one longitudinal plane and/or one or several transverse planes.

9.    A coupling as claimed in claim 6,
c h a r a c t e r i z e d    i n that said locking device (23)
comprises   a   number   of   interconnected   securing   plates
helically arranged in the connecting element (14).

10.    A coupling as claimed in claim 5, 6, 7 or 8,
c h a r a c t e r i z e d    i n   that said connecting element
(14)  is  made  from  at  least   one sintered metal pressured
piece,  the  porousity  and sintering temperature of which is
chosen in such a way that the force applied thereto by a jack
will  cause  the  pressed piece to be deformed and adapted to
the outer and inner shape, respectively, of said members.

1/5

0057292

**FIG. 1**

**FIG. 2**

2/5

0057292

FIG.3

0057292

**FIG. 6**   **FIG. 5**   **FIG. 4**

**FIG. 7**

**FIG. 13**

# FIG. 8

# FIG. 9

**FIG.10**

27

28

26

23

**FIG.11**

28

27

26

25

23

29

**FIG.12**

23

23

30

30

# EUROPEAN SEARCH REPORT

EP 81 20 0940.5

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| Y | DE - C - 871 230 (EHRENREICH & CIE)<br>* page 2, lines 100 to 105 *<br>-- | 1,5 | E 04 G 21/12 |
| Y,A | DE - C - 1 271 961 (STE DES GRANDS<br>TRAVAUX DE MARSEILLE)<br>* fig. 2 *<br>-- | 1,5,6 | |
| Y | FR - A1 - 2 270 473 (S.K.F. CIE<br>D'APPLICATIONS MECANIQUES)<br>* fig. 1 *<br>-- | 1,5 | **TECHNICAL FIELDS SEARCHED (Int.Cl.3)**<br><br>E 04 G 21/12<br>F 16 B 4/00 |
| A | GB - A - 1 042 247 (COMPOSITE PILING<br>AND FOUNDATIONS)<br>* fig. 3 *<br>-- | 8 | |
| A | US - A - 3 579 758 (REGAN)<br>* fig. 2 *<br>-- | 7,9 | |
| A | FR - A - 2 142 408 (FEDERAL-MOGUL)<br>* page 6, line 25 *<br>& US - A - 3 770 332<br>-- | 10 | |
| A | GB - A - 1 297 262 (C.C.L. SYSTEMS)<br>* fig. 8 *<br>---- | 8 | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 27-04-1982 | ZAPP |

EPO Form 1503.1 06.78